Europäisches Patentamt

European Patent Office

Office européen des brevets

(19)

(11) Publication number: **0 040 682**
**B1**

(12) # EUROPEAN PATENT SPECIFICATION

(45) Date of publication of patent specification: 25.03.87

(21) Application number: 81102215.1

(22) Date of filing: 25.03.81

(51) Int. Cl.⁴: **G 09 B 5/06,** G 09 B 7/02,
G 06 K 9/46, A 63 H 3/28,
G 10 L 5/04, G 06 F 15/20

(54) **Didactic device such as doll having simulated sight and voice.**

(30) Priority: 27.05.80 US 153342

(43) Date of publication of application:
02.12.81 Bulletin 81/48

(45) Publication of the grant of the patent:
25.03.87 Bulletin 87/13

(84) Designated Contracting States:
DE FR GB IT

(56) References cited:
EP-A-0 033 076
EP-A-0 131 681
GB-A-2 030 337
US-A-3 343 281
US-A-3 641 496

MACHINE DESIGN, vol. 52, no. 25, 6 November
1980, Cleveland, Ohio "Miniature systhesizer
generates baby-talk vocabulary", pages 88-89

(73) Proprietor: **TEXAS INSTRUMENTS**
**INCORPORATED**
**13500 North Central Expressway**
**Dallas Texas 75265 (US)**

(72) Inventor: **Scott, Warner C.**
**13443 Bold Venture Apt. 3-111**
**Dallas Texas 75243 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

### Background of the invention

This invention generally relates to a didactic device or educational teaching aid for providing a learning experience and/or entertainment in which an image processing system is combined with a speech synthesis system such that objects of various configurations can be viewed by an imager, compared with data signatures stored in a memory for identification purposes, and vocally named via the speech synthesis system. In a particular form of the invention, the didactic device is a doll having the appearance of a living creature, such as a human being, and having the simulated capability of sight and voice.

Heretofore, educational teaching aids have included speech synthesizer systems therein to enable the teaching aid to audibilize words, phrases and sentences in a human language in providing a learning experience.

Although such didactic devices have been designed for providing a learning experience in which speech synthesis is an important aspect, more unique forms of educational training aids are constantly being sought to further enhance learning experiences available for various purposes to individuals having diverse formal education backgrounds and intelligence skills ranging from severely limited to exceptional.

In another aspect touched by the present invention, dolls simulating the appearance of living creatures have been available as toys for providing entertainment and amusement from ancient times. More recently, dolls have been given simulated capabilities for performing many human functions, one such ability being vocal speech, wherein the doll is equipped with such voice speaking systems utilizing magnetic tapes, drums or disks for the storage of pre-arranged messages typically actuated mechanically by tilting the doll in a certain manner or by pulling on a "pull cord" to enable the message storage system to be operated for vocalizing the pre-arranged message provided therein. One such doll is described in US—A—3,343,281.

Another aspect with which the present invention is concerned involves optical character recognition, wherein the reading of characters on documents is accomplished opto-electronically. Generally, optical character recognition apparatuses function by opto-electronically scanning a character in a rectangular pattern of lines so as to produce quantized binary electronic signals corresponding to the pattern of the character being scanned. The quantized character pattern is stored in a memory and compared on a bit-by-bit basis with character patterns of standard characters such that the unknown character which is scanned is defined as corresponding to the standard character producing the closest similarity thereto.

The combination of an optical character recognition system with a voice annunciator system responsive thereto to produce voice messages corresponding to the message being optically scanned is generally known. See, for example, U.S. Patent 3,641,496 Slavin issued February 8, 1972, which document discloses the state of the art according to the preamble of claim 1.

While the foregoing aspects with which the present invention is involved are generally known, heretofore no didactic device for providing a learning experience and/or entertainment wherein the human functions of apparent sight and speech reflective of comprehension of what is seen has been developed.

### Summary of the invention

In accordance with the present invention, a didactic device or educational teaching aid is provided in which an image processing system is combined with a speech synthesizing system to enable the didactic device to identify "objects" as depicted on respective flash cards, for example, by viewing the flash card with the imager and by verbalizing audibly via speech synthesis to name the object viewed or to comment with respect to the viewed object in a comprehensible manner. To this end, the didactic device includes an optical imager for viewing an object so as to provide a signal data output indicative of the appearance of the object. The imager is coupled to a matrix memory of the random access type for arranging the signal data output in an x-y matrix form. The signal data output is received by a microprocessor which is provided with memory storage having firmware incorporated therein to provide data signatures of a plurality of object configurations. The microprocessor includes examination instructions via a programmed read-only-memory for comparing the data signal output of the imager with the data signatures provided by the firmware of the memory storage within the microprocessor so as to provide a character recognition comparator which produces an analytical signal output determinative of the comparative analysis between the signal data output of the imager and the closest data signature within the firmware of the memory storage of the microprocessor. The speech synthesizing system is controlled by the microprocessor and includes speech synthesis electronics, a vocabulary memory, and a speaker. The speech synthesis electronics is operably connected to the character recognition comparator of the microprocessor for generating an audio output reflective of the content of the analytical signal output from the character recognition comparator. The vocubulary memory is of the read-only-memory type and contains a multiple number of digitally coded words, phrases and sentences which are accessed selectively by the speech synthesis electronics in response to the particular analytical signal output from the character recognition comparator of the microprocessor. The speaker is connected to the speech synthesis electronics and converts the audio output received therefrom to audible sound. The speech synthesis electronics may take the form of the speech synthesizing integrated circuits disclosed in DE—A—2917161, wherein audio output signals are generated in response to coded digital signals received as an input for conversion to audible speech by appropriate electronics circuitry and a speaker. The memory storage within the microprocessor may be of the random access memory type as controlled by the microprocessor which includes a ROM program providing conversion of the analog data signal output of the imager to digital signals, together with the location and discretizing of the image (i.e., the location of discrete objects in the field of view of the imager—where each object is and how tall each object is).

In a specific application of the present invention, the didactic device may take the form of a doll which simulates the appearance of a living creature—in the usual instance, a human being, although various non-human forms are also envisioned, such as animals, reptiles, etc. The doll is equipped with the image processing system and the speech synthesis system, thereby having the simulated capability of sight and voice. Thus, flash cards on which various indicia, such as symbols, geometrical shapes, and/or legends are depicted may be individually viewed by the imager whose processing capability identifies the object on the flash card, while the speech synthesis system vocalizes what appears on the flash card viewed by the imager via apparent speech from the doll of a comprehending nature to what is shown on the flash cards. Thus, the doll has the apparent ability of "seeing" the object on the flash card and speaking words, phrases, or sentences which indicate comprehension of what has been seen by the doll.

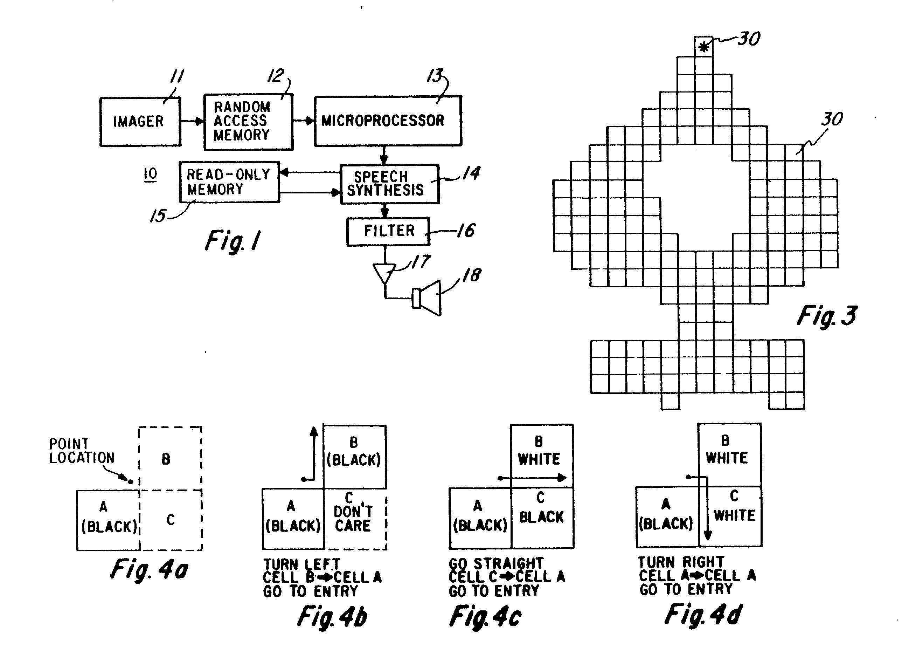

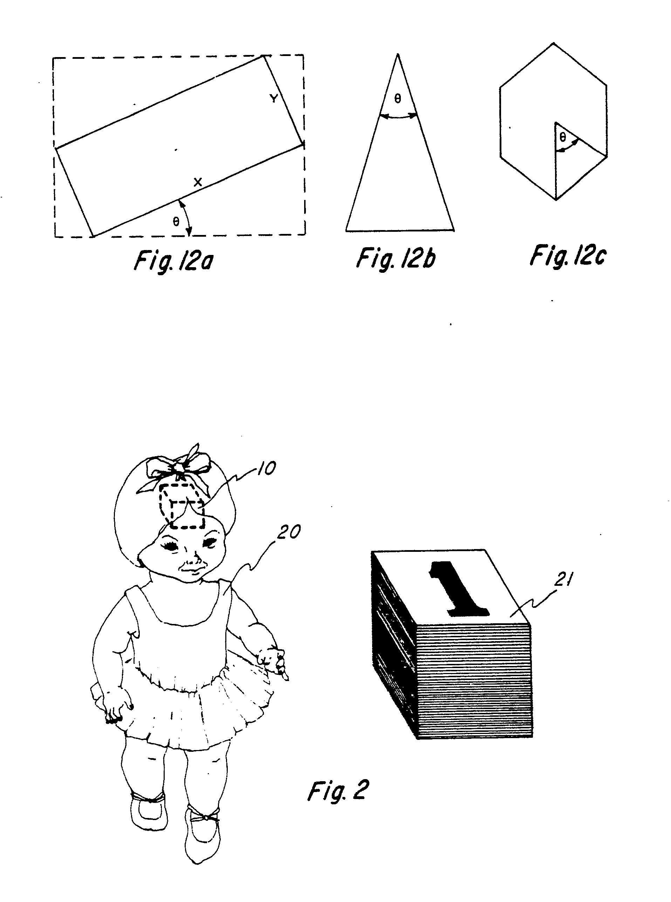

Attention is directed to our Divisional Application number EP—A—0 131 681 published 23.01.1985 which has the particular description and figures in common with those of the present application. The claims of EP—A—0 131 681 are directed to the method of character recognition disclosed with reference to figures 3—13.

Brief description of the drawings

By way of example, and in order to describe various aspects of the invention in greater detail, together with the advantages thereof, reference is made to the drawings, wherein:

Figure 1 is a block diagram of a didactic device as constructed in accordance with the present invention;

Figure 2 is a diagrammatic view showing the didactic device of Figure 1 as implemented in a doll having simulated sight and voice for viewing flash cards and audibly commenting on the respective objects depicted thereon in a comprehending manner in accordance with the present invention;

Figure 3 is a diagram of an object to be viewed for character recognition;

Figures 4a—4d are diagrams illustrating a technique for characterizing individual objects in the field of view of the imager included in the didactic device of Figure 1;

Figures 5a—5d are diagrams illustrating a technique employed for characterizing the number of individual cells or units within the boundary of the object in the field of view of the imager included in the didactic device of Figure 1, as a generalized determination of the area of the object;

Figure 6 is a flow chart illustrating a technique for finding an object in the field of view of the imager in the didactic device of Figure 1 for character recognition thereof;

Figure 7a is a diagram of an object for character recognition, similar to Figure 3, but showing boundary labeling of individual cells or units of the object;

Figure 7b is a chart containing data relating to the boundary labeling procedure of Figure 7a and the technique for generalizing the area determination of the object of Figures 5a—5d;

Figure 8 is a diagram of a generalized contour or shape of an object to illustrate principles of the character recognition procedures employed by the didactic device of Figure 1;

Figures 9a—9c are diagrams illustrating a technique for determining the contour or shape of an object in the field of view of the imager in the didactic device of Figure 1;

Figure 10a is a diagram of an object to be viewed for character recognition by the imager of the didactic device of Figure 1;

Figure 10b is a diagram of vector values to be assigned to respective current base course vectors as employed in the contour determination of the object shown in Figure 10a;

Figure 11 is a chart containing data relating to the contour determination of the object shown in Figure 10a, and showing the final "contour signature" thereof;

Figures 12a—12c are diagrams illustrating particular geometrical shapes which may be recognized by the didactic device of Figure 1; and

Figures 13a—13f are diagrams respectively illustrating different objects for character recognition by the didactic device of Figure 1, and showing the "contour signatures" unique thereto.

Detailed description

At the outset, it will be understood that the didactic device offering optical character recognition accompanied by intelligent speech reflective of the content of what is seen will be susceptible of numerous physical embodiments depending upon how the didactic device is intended to be used and its environment of use.

Referring more particularly to the drawings, Figure 1 illustrates a block diagram of a didactic device or educational teaching aid 10 as constructed in accordance with the present invention for providing a learning experience and/or entertainment. The didactic device 10 of Figure 1 comprises a composite system, wherein an optical character recognition processing subsystem is combined with a speech synthesis sub-system such that the didactic device is enabled to simulate sight and speech for identifying objects and vocalizing such object identification in an appropriate manner. To this end, the optical character recognition sub-system includes a visual detector means in the form of an optical imager 11 for viewing an object and providing a signal data output indicative of the appearance of the object. The imager 11 may be in any one of several suitable forms, such as an electronically scanned photosensor, i.e. a television camera vidicon; a mechanically scanned photosensor, wherein movement of a sensor or mirror across a field of view is accomplished by mechanical means; photographic film; or a "staring" multiple element array, such as an array of charge coupled devices or any matrix array having a plurality of discrete points. In a preferred form, the imager 11 may be a charge coupled device imager array on a single imager chip containing 32×32 array elements in the matrix. The image processing sub-system further includes a memory 12, and a data processor in the form of a microprocessor 12 having a character recognition comparator incorporated therein. The memory 12 is preferably of the random access type having a storage capacity capable of accepting the signal data output from the imager 11. Thus, the random access memory 12 may have a small storage capacity, e.g. of 32×32 bits corresponding to the array of imager cells. The random access memory or RAM 12 is connected to the output of the imager 11 and is arranged in columns and rows of bits which may be designated as pixels with white pixels being of a "0" binary value and black pixels being of a "1" binary value. Thus, the contents of the RAM 12 constitute a digital image of the image received on the viewing face of the imager 11 corresponding to an object disposed in the field of view. The microprocessor 13 acts as a central processor unit and includes a microcontroller for examining the contents of the RAM 12. The microprocessor 13 further includes a read-only-memory (ROM) which contains a program with instructions for controlling the microprocessor. The ROM may provide for analog-to-digital conversion of the image signal data, followed by the location and discretizing of the image, i.e. the location of discrete objects in the field of view of the imager 11, where any such object is, and how tall the object is. The microprocessor 13 further includes a random access memory RAM for data storage during its computing operations, wherein data signatures of a multiple number of object configurations are stored in the form of firmware for comparison with the digital data comprising the image as stored in the RAM 12. To this end, the microprocessor 13 includes analyzer means in the form of a character recognition comparator as part of the data processing capability thereof the character recognition comparator producing an analytical signal output determinative of the comparative analysis between the digital image data from the RAM 12 and the firmware stored within the RAM of the microprocessor 13. The microprocessor 13 may be a TMS 8080 microprocessor or a TMS 9980 microprocessor as manufactured by Texas Instruments Incorporated of Dallas, Texas, or any suitable microprocessor depending upon the degree of complexity of the application desired for the didactic device 10. In this sense, it will be understood that any suitable optical character recognition apparatus could be employed as the image processing sub-system of the didactic device 10 as · constructed in accordance with the present invention. In this respect, although a relatively unsophisticated optical character recognition sub-system may be satisfactory for use in the present didactic device, it will be understood that a more sophisticated optical character recognition apparatus such as that disclosed and claimed in EP—A—0033076 published on 05.08.1981 may be employed.

The optical character recognition processing sub-system is combined with a speech synthesis sub-system which includes speech synthesis electronics 14, a vocabulary memory 15 and sound conversion circuitry connected to the output of the speech synthesis electronics 14, wherein the sound conversion circuitry may include an appropriate low pass filter 16, an audio amplifier 17 and a speaker circuit 18 of a suitable type for converting the audio output from the speech synthesis electronics 14 to sound energy. By way of example, the speech synthesis electronics 14 may employ a linear predictive coding technique preferably including a speech synthesis semi-conductor chip, such as the TMC 0280 speech synthesis chip manufactured by Texas Instruments Incorporated, Dallas, Texas. The chip operates from sequentially called single frames of digitally stored speech intelligence and is of a type disclosed in the aforesaid DE—A—2917161. This particular speech synthesis technique utilizes an electronically alterable model of the human vocal track which is configured by digital input. Along with the digital configuration input, pitch and other excitation digital control signals are applied to generate an analog signal representing the audio sound requested and identified by the digital information input to the speech synthesis chip 14 via the vocabulary memory 15 which preferably is of a read-only-type. Previously digitally coded speech (which may be words, phrases, and sentences, for example) is stored in the vocabulary memory 15 and applied to the speech synthesis chip 14 as required in response to the accessing thereof via the speech synthesis chip 14 as determined by the analytical output signal from the character recognition comparator of the microprocessor 13. It will be understood that other suitable forms of speech synthesis systems may be employed in the didactic device 10 in accordance with this invention. Thus, a didactic device or educational learning aid 10 has been provided combining optical character recognition with speech so as to offer a significant number of applications as learning aids as well as providing entertainment and amusement. In a particular aspect, the didactic device 10 is incorporated into a doll so as to combine the human functions of apparent sight and speech, wherein the speech is reflective of what has been "seen" in providing vocal comments of a comprehending nature. As illustrated in Figure 2, a doll 20 equipped with a didactic device 10 in accordance with the present invention as shown in Figure 1 may be called upon to "identify" the object, legend and/or symbol depicted on a flash card as included in a stack of such flash cards 21, wherein different indicia are provided on the respective flash cards. By virtue of the simulated sight provided by the image sub-system and the simulated speech provided by the speech synthesis sub-system of the didactic device 10, the doll 20 is able to detect and recognize "playing cards", for example, and to name the "suit" and "rank" of same. The doll may also identify and vocally describe various geometric shapes. The degree to which the doll may be able to "identify" and vocally "name" various objects is limited only by the storage capacity of the RAM included in the microprocessor 13 of the didactic device 10. The doll 20 may be in human form, or may simulate the appearance of other living creatures, such as animals or birds. Variations of the didactic device could include the inclusion of a random number generator incorporated with the optical character recognition comparator of the microprocessor 13 that arbitrarily causes a "mistake" in identity to occur at infrequent instances, such that the doll 20 could be punished for misnaming the object on the flash card exposed to the imager 11 such as by "spanking" on the rear area to actuate a concealted microswitch, whereupon the doll is programmed to try again in identifying the object on the flash card. Thus, the doll 20 has the simulated capability of "sight", can vocally comment on what it has "seen", and is capable of interaction with the child whenever a randomly prearranged "mistake" is made by the doll 20 in identifying the object on the flash card. Since the flash cards may depict recognizable objects such as the alphabet and arabic numbers, the doll 20 can serve as an educational teaching aid to a child in the proper identification of such symbols.

In order to implement the "object identification" accomplished by the imager processing sub-system, a number of computational techniques may be interchangeably adopted for use by the microprocessor 13 in evaluating the digital image data stored in the RAM 12 for comparison with the multiple number of data signatures of object configurations incorporated as firmware in the RAM memory storage of the microprocessor 13. To this end, an arbitrary object configuration providing a binary (black/white) image will be considered, such as the object illustrated in Figure 3. In this connection, it will be understood that each of the individual square "units" or "cells" 30 of the object are "black" or a binary "1", while undesignated blank areas (of the same size units) associated with the object are "white" or a binary "0". The object of Figure 3 would then exist as a series of "1's" and "0's" in the matrix of the RAM 12 representing the digital image data of the object as viewed by the imager 11. Optical character recognition attempts to extract as much information as possible from such image signal data as efficiently as possible. Typical of problems to be solved are: How many different objects are there in the picture? Where is each object located? How large is each object? What shape is each object? Are any of the objects not simply connected solids (i.e., contain holes)? Finally, is there anything in the digital image data being processed for object identification that matches an image that the microprocessor 13 has been programmed to recognize?.

In solving such problems, a number of computational techniques may be employed in various combinations. In discussing these computational techniques, it will be understood that the roles of black vs. white, left vs. right, x vs. y, etc. are interchangeable. Further, for purposes of this discussion, the convention shall be adopted of objects being "black" against a "white" background.

Finding objects

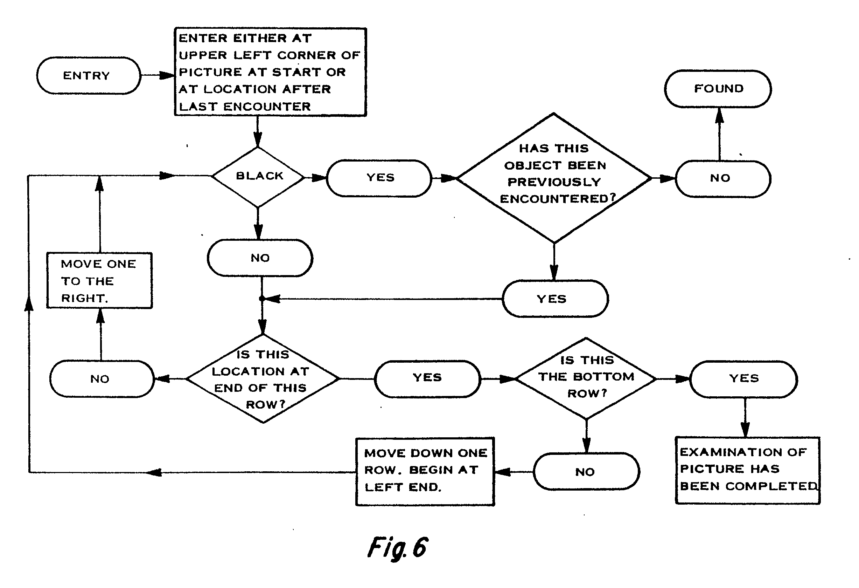

Beginning at a starting position in the upper left-hand corner of the picture as represented by the signal data output contained by the RAM 12, each pixel or "cell" or "unit" is examined by the microprocessor 13 under the control of its ROM in a raster scanning mode until a "black" pixel is encountered (assuming that there is anything to see at all). If this "black" pixel is not "labeled" as belonging to a previously encountered object (to be discussed hereinafter), a new object has been found. Figure 6 illustrates a flow chart of this procedure.

Counting objects

Beginning with a count of 0, the count is incremented each time a new object is encountered if this is all the information that is desired. However, this counting procedure can be more detailed, such as by counting individually the number of round objects, objects smaller than a certain size, objects whose perimeter-squared to area ratio falls in a certain range, etc.—as dependent upon the desired application. This procedure could have an end result of a zero count for all objects to trigger a system response to acquire another image using a shorter integra-tion time (as the image may have been saturated) or, if other data prove this is not to be the case, a suitable vocal output to the user via the speech synthesis sub-system, e.g., "I don't see anything at all".

Object characterization by Circumnavigation

Characterizing individual objects in the field of view of the imager 11 encompasses a determination by the microprocessor 13 of the topology of the object, namely—its size, shape, connectivity, aspect ratio, boundary properties, etc.—as a necessary precursor to enable the didactic device 10 to recognize the object for the purpose of generating appropriate vocal responses via the speech synthesis electronics 14 to the user. To this end, an object characterization technique which may be termed a "circumnavigation" procedure enables the extraction of a large amount of information about the configuration of the object. Referring to the object illustrated in Figure 3, assume that the "find" procedure in accordance with the flow chart illustrated in Figure 6 is being executed by the ROM of the microprocessor 13 and that the black pixel or cell 30 having the asterisk and located at the top of the object has been encountered. As a first procedure in characterizing this object, the "circumnavigation" technique envisions "walking around the periphery" of the object, while simultaneously monitoring certain parameters and taking certain actions in the course of the circumnavigation procedure which enables a significant amount of information about the topology of the object to be extracted.

In the object characterization by "circumnavigation", certain procedure "rules" are followed, as depicted in Figures 4a—4d. The "rules" of the circumnavigation procedure may be summarized, as follows:

(1) The "always turn left" (or right) rule is followed, this being a basic technique employed to teach a computer to find its way out of a maze. Referring to Figure 4a, assume that the point position is as shown adjacent to the cell A which has been identified as a "black" cell designating a binary "1". Figures 4b—4d indicate the three possible conditions confronting the point location, and the direction of movement which the point must take in order to trace out point movement around the periphery of an object, such as the object shown in Figure 3. Thus, if movement of the point encounters a black pixel or cell 30 at cell position B, movement of the point is turned in a leftward direction, with cell B now becoming cell A for further determination of the point movement. On the other hand, if cell position B is a "white" pixel designating a "0" binary state, movement of the point proceeds in the manner indicated by either Figure 4c or 4d, depending upon whether cell position C is a "black" or "white" pixel respectively designating a "1" binary state or a "0" binary state. Thus, if cell position C is a "black" pixel, the point movement proceeds straight ahead along the boundary of the "black" pixel at cell position C which now becomes cell position A for subsequent point movement. On the other hand, if cell position C is a "white" pixel as depicted in Figure 4d, the movement of the point is turned right and the point proceeds downwardly along the perimeter of the "black" pixel at cell position A which remains as cell position A for subsequent movement of the point. This procedure is followed in a continuing cycle, until the point has been moved entirely around the perimeter of the object and has returned to the starting cell (30) as designated by the asterisk in Figure 3.

(2) While movement of the point is taking place in the manner indicated, accumulative totals are maintained in the RAM of the microprocessor 13 of the respective numbers of "go straight" "turn left", and "turn right" movement transitions which have been made. This information may then be used at a later time to calculate the approximate perimeter of the object.

(3) As the point movement proceeds, the extreme X and Y coordinate positions assumed by the point during its movement, i.e., the furthest north, east, south, and west in the field of view attained by the point while circumnavigating the object, are "flagged" for data retention.

(4) As point movement proceeds, if it is determined that the point is located on either the west or east edge of the object (in the context of the "find" procedure), that particular cell 30 is appropriately labeled by "tagging" so that subsequently the "find" procedure can discriminate against previously encountered objects.

(5) As movement of the point occurs, certain computations which have the effect of digitally reproducing the action of a mechanical planimeter may be made so that a measure of the area of the object being circumnavigated may be extracted.

(6) Finally, as the movement of the point proceeds, information as to the "instantaneous heading" of the point is continuously made available to an appropriately coded "contour extraction" algorithm having the purpose of deducing the general "shape" of the object.

Perimeter calculation

By denoting the number of "go straight" transitions, i.e. Figure 4c, made by the point during its circumnavigation of the object by the symbol N1 and the number of "turn left" (Figure 4b) and "turn right" (Figure 4d) transitions by the point by the symbol N2, the perimeter of the object may be essentially approximated by:

$$P = N1 + N2/\sqrt{2}. \qquad (I)$$

Area Calculation

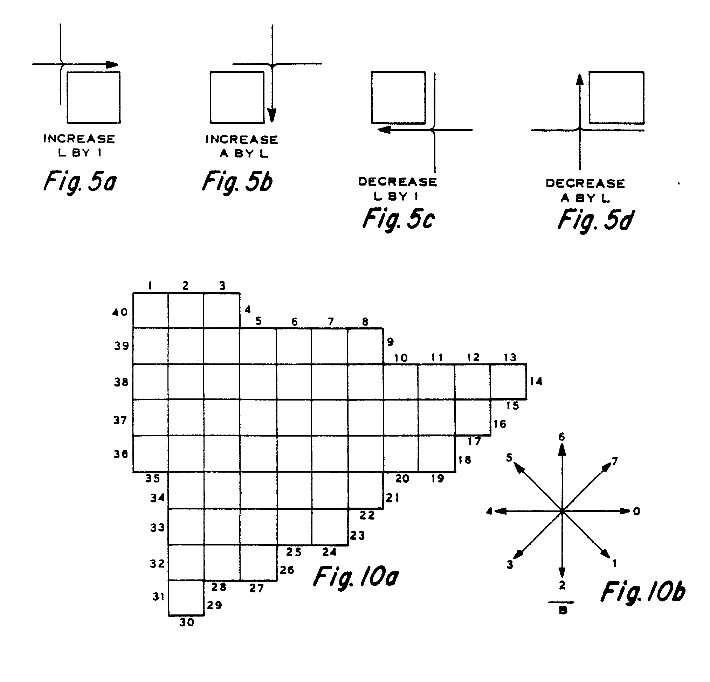

In approximating the area of the object, the operation of a mechanical planimeter may be digitally simulated by first initializing the parameters A and L to 0 and 1, respectively. Thereafter, as the circumnavigation procedure carried out by the moving point is being practiced, the rules illustrated in Figures 5a—5d are followed at each transition, such that when the point has been returned to the starting cell 30 as identified by the asterisk in Figure 3, the parameter A will be equal to the number of cells 30 contained within the boundary of the object. Thus, if the transition is in a right-hand direction, the parameter L is increased by 1, as illustrated in Figure 5a. If the transition of the moving point is in a downward direction, the parameter A is increased by the count for the parameter L, as indicated in Figure 5b. Transition movement of the point in a left-hand direction calls for the parameter L to be decreased by 1, as in Figure 5c, while transition movement of the point in an upward direction as shown in Figure 5d calls for the parameter A to be decreased by the count for the parameter L.

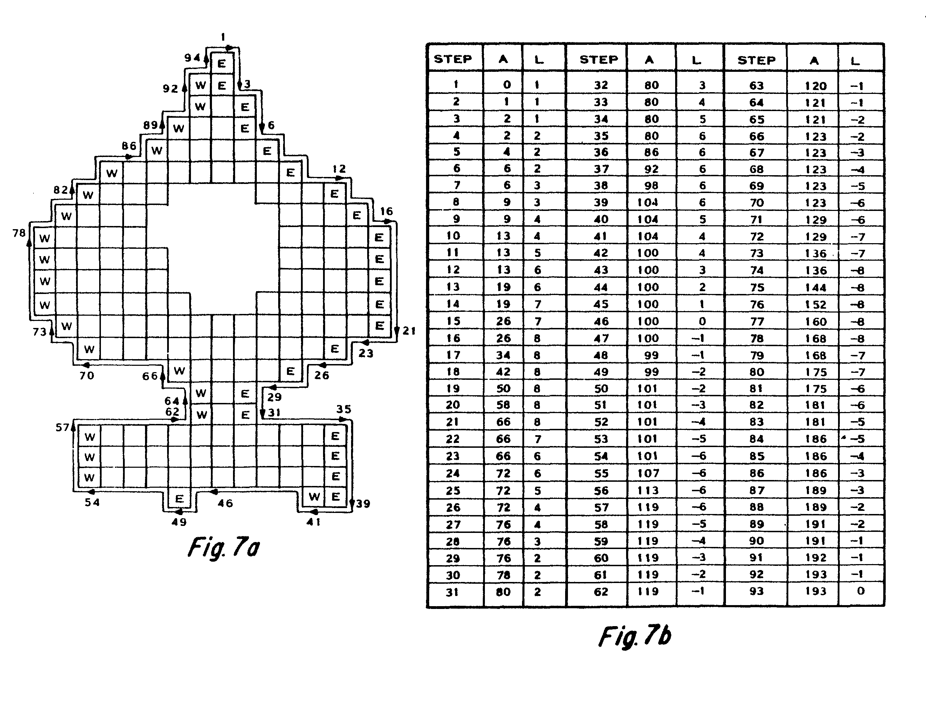

Referring to Figures 7a and 7b, the effect of this procedure digitally simulating the operation of a mechanical planimeter as employed on the object shown in Figure 3 is indicated. In this respect, Figure 7a illustrates the object of Figure 3 as circumnavigated by a moving point in accordance with the technique illustrated in Figures 4a—4d, identifying the direction of movement of the point and certain transition step numbers as the point moves about the perimeter of the object. As previously described, individual cells 30 found to be on either the "west" or "east" edge of the object as determined by the "find" procedure of Figure 6 are appropriately labeled in the memory storage of the microprocessor 13. The table shown in Figure 7b contains data obtained from following rules illustrated in Figures 5a—5d for area calculation. Thus step #1 begins with the initialized values A=0 and L=1. Step #2 is a downward transition movement for the point, as depicted in Figure 5b, wherein A is increased by the count for L. Thus, the table shown in Figure 7b at step #2 gives the values; a=1 and L=1 Step #3 continues with a downward transition movement, whereby the parameter A is increased by the count of the parameter L, such that A now equals 2, while L equals 1. The values of A and L continue to be affected by the rules as illustrated in Figures 5a—5d, being tabulated in the table of Figure 7b. At the conclusion of the circumnavigation procedure, or step 94, the parameter A equals 193, while the "go straight" transitions N1 equal 39 and the "turn left" or "turn right" transitions N2 equal 55, such that the perimeter of the object approximates 77 by applying the values for N1 and N2 to the equation (I).

Filling factor

Upon completion of the circumnavigation procedure wherein the moving point is caused to travel about the entire perimeter of the object, extremal X and Y coordinates encountered by the point during its circumnavigation movement will have been "tagged" and stored within the RAM contained in the microprocessor 13. Having the data information provided by these extremal X and Y coordinates, it is then possible to calculate the area of the smallest Cartesian-oriented box which totally contains the object, via the following equation:

$$B=(Xmax—Xmin) * (Ymax—Ymin), \quad (II)$$

where B is the area of the smallest Cartesian-oriented box totally containing the object. In certain circumstances, the ratio of the actual area A of the object to the area B may be of use in determining further information about the object.

Boundary labeling

In addition to discriminating against previously encountered objects as an aid in the "find" procedure diagrammed by the flow chart of Figure 6, boundary labeling as illustrated by those cells 30 marked "W" for "west" or "E" for "east" in Figure 7a is useful in another respect. If a determination is to be made as to whether the object is a simple solid object or if it contains one or more "holes" therein, a new "find" procedure based upon the flow chart sequence of Figure 6 may be instituted which is not allowed to begin until the raster scan is determined to be between a "W" cell 30 and an "E" cell 30 of a previously encountered object. Then, by reversing the finding of "black" and "white" cells, all of the previously-described procedures including the "find", "count", and "circumnavigate" procedures may be iterated to investigate the nature of the hole(s) within the object. This technique is practiced by using the same ROM code within the microprocessor 13 and can be nested indefinitely.

Contour extraction

Another technique which may be implemented in the use of the didactic device 10 in accordance with the present invention may be termed a "contour extraction" procedure, wherein a detailed description of the "shape" or configuration of an object may be obtained. In the previously described circumnavigation procedure, the out-line of an object is meticulously traced by a pixel-by-pixel or cell-by-cell approach. The "contour extraction" procedure to be hereinafter described has as its purpose the provision of a capsule description of the shape of an object and may be accomplished by imposing the following criteria on the transition movements of a point in traveling about the boundary of the object whose shape is to be determined.

(1) The description of "current heading" is confined to one of the following eight bearings: north, northeast, east, southeast, south southwest, west, and northwest. Therefore, changes in course are reported in increments of 45° and identified as being either to starboard or to port.

(2) No determination as to a course change is made until the most recent headings have exceeded 45° offset from the old course for a predetermined distance of some length. If deviations from the old course heading are of relatively short length and old course heading is then resumed, this rule provides that such minor course deviations are to be ignored.

(3) If a definite change in course is detected, the determination of the new course or "current heading" is not made until the new course heading has been pursued for a predetermined length.

(4) The distances traveled on each leg or "current heading" of the object perimeter journey are simply described as short, medium, long, and very long.

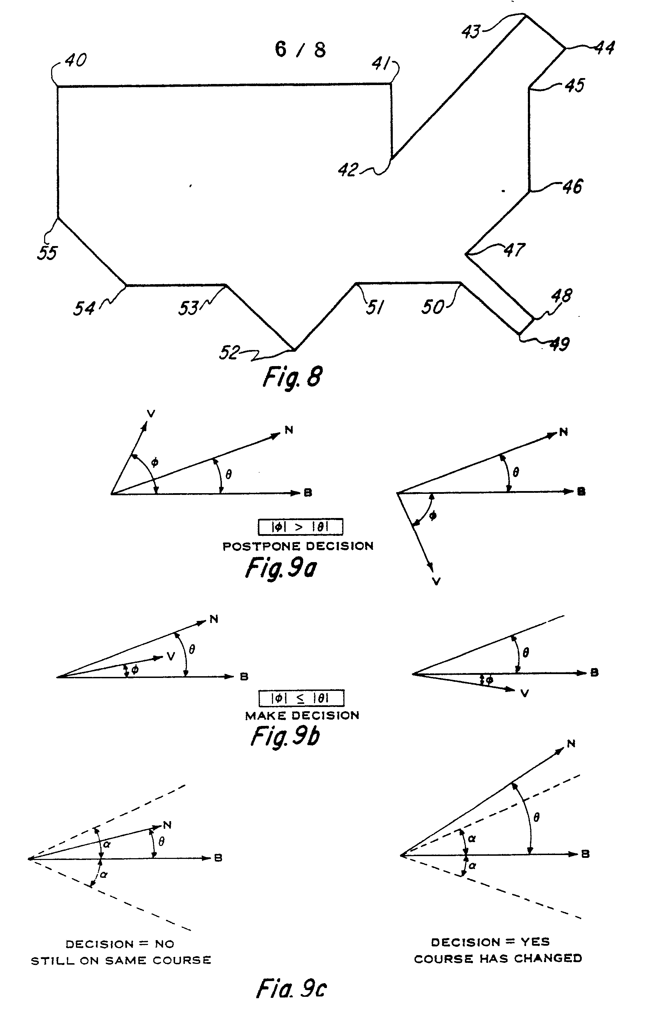

Using these criteria, assume that the imager 11 of the didactic device 10 has a field of view in which a map of the United States appears. Using the "contour extraction" procedure which is stored in the ROM portion of the microprocessor 13, and based on the foregoing criteria, the signal data as obtained from the imager 11 and stored in the RAM 12 would be converted in the RAM central processing unit of the microprocessor 13 so as to provide an object with a shape such as is illustrated in Figure 8 for subsequent comparison and analysis by the character recognition comparator with data signatures of various object configurations as stored in the RAM portion of the microprocessor 13.

Referring to Figure 8, and paraphrasing the description of the object illustrated therein as being derived from a map of the United States, a descriptive report might read something like the following. From the starting position 40 (Seattle), the point moved due east for a very long distance to position 41. Then, the point turned 90° to the right (Lake Huron) and proceeded a short distance to position 42. At position 42, the point turned 135° to the left (Detroit) and proceeded on this new course for a long distance to position 43. Then, there followed a 90° turn to the right, a short leg to position 44, and another 90° turn to the right (Maine). The next leg to position 45 is short, but resulted from a number of radical course deviations which were ignored under rule (2) of the criteria for the "contour extraction" procedure. Then, a 45° turn to the left (New York city) occurred, and after a medium leg on this course to position 46, a 45° turn to the right (Cape Hatteras) occurred and continued for a medium distance to position 47. Then, a turn to the left of 90° was followed by a journey of medium length to position 48, after which two 90° turns to the right occurred with a short leg 49 in between (southern tip of Florida). A medium distance was traveled on the last course, to position 50 (vicinity of Tallahassee, Florida), followed by a 45° turn to the left. After a medium distance to position 51, (Beaumont, Texas) another 45° turn to the left occurred, followed by a medium distance to position 52 (Brownsville, Texas), and then a 90° course change to the right. After a medium stretch on this leg to position 53, (El Paso, Texas), a 45° turn to the left was followed by a medium leg to position 54 (San Diego, California), and then a 45° turn to the right. Thereafter, another medium leg occurred to position 55, (San Francisco, California), then a 45° turn to the right, and a final long distance back to the starting location 40 (Seattle, Washington). Assuming that the language of the microprocessor code assigns the values 1, 2, 3 and 4 for the respective lengths (short, medium, long and very long) of the course distances, that course changes of 45N degrees are reported as N where +N means a turn to the right and −N means a turn to the left, and that each leg of the outline is reported in the format (1, c) where 1= the length of each leg and c= the course change at the end of that leg, a contour data signature of the object shown in Figure 8 would read:

(4,2) (1,−3) (3,2) (1,2) (1,−1) (2,1) (2,−2) (2,2) (1,2) (2,−1) (2,−1) (2,2) (2,−1) (2,1) (2,1) (3,2).

Although the shape of the object shown in Figure 8 is considerably distorted, it is nevertheless readily recognizable as a general outline of the United States. Even with the post primitive character recognition code, data corresponding to this generalized outline of the United States is sufficiently specific to avoid recognition errors for the generalized outline of other countries of the world, such as Brazil, India, England, France, Germany, Spain, etc.

The implementation of the contour extraction technique requires adherence to the previously mentioned criteria which are generally illustrated in Figures 9a—9c. The contour extraction procedure is combined with the circumnavigation procedure such that at the start of the circumnavigation procedure, a determination is made as to the vector sum of the first individual steps to obtain an original base course B. After each transition movement the following procedures as diagrammed in Figures 9a—9c are adopted in practicing the contour extraction procedure.

(1) Assuming that the base course B is known, the last several N individual transition vectors are accumulated in the memory storage of the microprocessor 13 and their vector sum N is formed.

(2) Next, the absolute value of the angle φ between the base course vector B and the most recent transition vechor V is compared against the absolute vector of the angle θ between the base course vector B and the vector sum N. If the angle φ is greater than the angle θ, it is assumed that the change in angles has not "settled down" to a definite value, although a macroscopic course change may be detectable. Accordingly, a decision as to the subsequent course direction is postponed for at least one more transition movement. This is the condition illustrated in Figure 9a. If, however, the angle φ is less than or equal to the angle θ, this condition enables a determination as to whether or not a course change has taken place. This is the condition illustrated in Figure 9b. If the angle θ is less than some predetermined constant angle α, any deviation from the base course B is sufficiently small so that it may be ignored as though no course change has been detected. If however, the angle θ is greater than the angle α, a change in course has indeed occurred. At this point, the base course B is terminated, and its length is calculated via the formula:

$$L=\sqrt{(X-X_0)^2+(Y-Y_0)^2} \qquad \text{(III)}$$

where (X, Y) are the coordinates of the present location, and $(X_0, Y_0)$ are the coordinates of the location of the last course change.

(3) Next, a new base course B' is computed, using the old base course B together with the angle θ as a guide, the coordinates $(X_0, Y_0)$ are replaced with the new present coordinates (X, Y), and other computations which may have relevance to a particular application are made.

(4) Finally, the most recent transition vector V is entered into the retained array of the N previous individual transition vectors in the "most recent" position, with the other transition vectors moved backwardly in the storage array such that the "least recent" transition vector is discarded from memory.

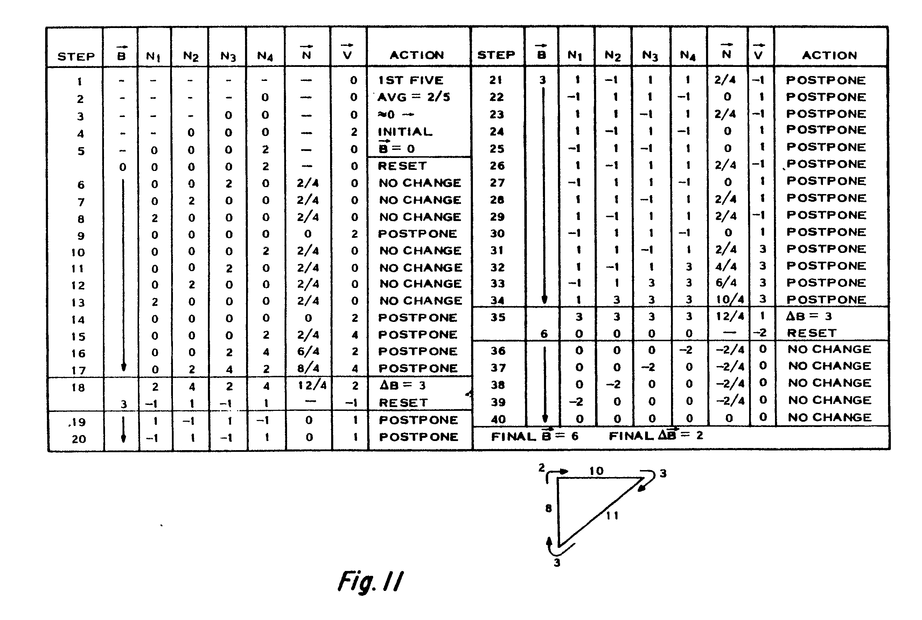

Referring now to Figures 10a and 10b, a configuration or shape of an object for character recognition by the imager 11 of the didactic device 10 of Figure 1 is illustrated by way of example in Figure 10a to further explain how the contour extraction technique may be implemented. Figure 10b diagrammatically identifies the values assigned to the current "base course" vector represented by the symbol $\vec{B}$. For example, a "due east" course for the current "base course" vector $\vec{B}$ has a value of "0", while a "due west" course would have a value of "4". In traveling about the perimeter of the object shown in Figure 10a whose shape or configuration is to be characterized, the symbols $N_1$—$N_4$ as adopted in the table illustrated in Figure 11 represent the last four individual transition vectors, $\vec{N}$ is the average value of these four individual transition vectors $N_1$—$N_4$, and $\vec{V}$ is the most recently encountered transition vector. The table of Figure 11 contains data based upon the value diagram of Figure 10b and obtained in following a moving point about the perimeter of the object shown in Figure 10a. It will be understood that the rules described in conjunction with Figures 9a—9c are applied as the moving point travels about the perimeter of the object shown in Figure 10a. In this respect, it will be observed that each time $|\vec{V}|$ is greater than $|\vec{N}|$, the action taken is to postpone a decision in accordance with the rule illustrated in Figure 9a. The individual steps or "legs" about the perimeter of the object shown in Figure 10a are numbered consecutively. At the end of each step, $\vec{V}$ is entered in the $N_4$ column of the table shown in Figure 11, all values $N_4$—$N_2$ are shifted back one position, and the value $N_1$ is discarded as the "least recent" transition vector in the series.

Upon detection of a non-zero course change (identified as ΔB in steps 18 and 35 of the table shown in Figure 11), $\vec{B}$ is reset, along with the resetting of the value $\vec{V}$ and the N's to values relative to the new value $\vec{B}$, as opposed to the old $\vec{B}$. This is accomplished by subtracting ΔB from the previous values of $\vec{V}$ and the N's.

Although the outer contour of the object shown in Figure 10a has been described as being determined in terms of vectors quantized to 45° increments, it will be understood that the quantizing increments may be other than 45°, such as 30°, 22.5°, etc. depending upon the application desired. Similarly, while the example provided in Figures 10a—10b and the data contained in the table of Figure 11 provides for the saving of the four most recent transition vectors, $N_1$—$N_4$, this choice is arbitrary and the number of such transition vectors may be increased or decreased, depending upon the degree of sophistication desired in determining a contour signature for an object as detected by the imager 11 of the didactic device 10 of Figure 1.

Thus, the "data signature" or configuration of an object is determined by the contour extraction technique in terms of a series of "course changes" required to circumnavigate the object. The basic topological features of an object are extracted by this technique which may be performed by the RAM included in the microprocessor 13 of the didactic device 10 shown in Figure 1. The final contour "data signature" for the object illustrated in Figure 10a based upon the contour extraction procedure as described is (10, 3) (11, 3) (8, 2), and the object may be identified by the general processing unit of the microprocessor 13 as generally conforming to a right-angle scalene triangle.

In enabling various geometrical shapes to be recognized and described from data acquired from the imager 11 of the didactic device 10 shown in Figure 1, if it be assumed that the contour extraction technique indicates the outline of the object to be basically four vectors each oriented at successive 90° turns to the right with respect to the previous one, the object is identified as essentially a rectangle, as illustrated in Figure 12a. The calculation of the length-to-width ratio x/y and the angle of orientation θ can be accomplished via a straightforward trigonometric derivation, using the equations:

$$\frac{x}{y} = \frac{z+\sqrt{z^2-4}}{2}, \text{ where } z= \frac{S^2}{A}-2 \quad (IV)$$

and

$$\theta = 1/2 \ \sin^{-1} \left[ \frac{2(B-A)}{S^2-2A} \right] \quad (V)$$

In the foregoing equations (IV) and (V),
S=the semi-perimeter (one-half of the perimeter);
A=the area of the rectangle; and
B=the area of the dotted outline,

all of which may be directly measured by the circumnavigation procedure.

As to the isosceles triangle shown in Figure 12b, the angle θ may be determined by the following equation:

$$\frac{S^2}{A} = \frac{2(1+\sin{(\theta)})^2}{\sin{\theta}} \quad (VI)$$

A determination of whether the triangle is acute or obtuse may be made by comparing whether the medium length of the three sides is closer to the length of the longest or the length of the shortest side.

Referring to the N-sided regular polygon shown in Figure 12c, the contour extraction technique will have provided N vectors which are generally equal in length and successively oriented in approximately equal angles. Thus, the object is readily identified as a polygon by the contour extraction technique. Confirmation of this shape may be obtained via the following equation:

$$\frac{S^2}{A} = N \tan \frac{\theta}{2} \qquad \text{(VII)}$$

The mathematical analysis provided with the respective objects illustrated in Figures 12a—12c can be incorporated into the read-only-memory portion of the microprocessor 13 for further enhancing the ability of the microprocessor 13 to employ the signal data obtained from the imager 11 for object recognition and comparison purposes.

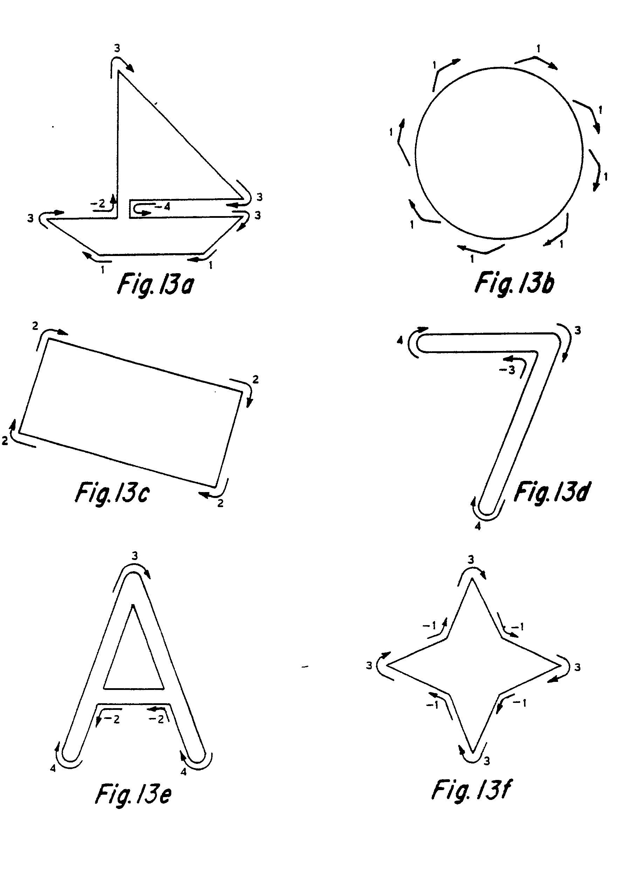

Some typical examples of objects whose shape or configuration may be characterized by the microprocessor 13 upon being viewed by the imager 11 are illustrated in Figures 13a—13f, with the contour "data signature" unique to these respective objects as determined by the contour extraction technique herein described being given. This unique contour "data signature" will basically remain invariant over a relatively large range of general distortions of the particular object in question. Moreover, the contour "data signature" for each object is not sensitive to the orientation of the object, except that it may appear the contour "data signature" has undergone the operation of a circular shift register. In the latter respect, referring to the object "A" in Figure 13e, for example, its contour "data signature" as shown is (neglecting the vector lengths)

$$3 \quad 4 \quad -2 \quad -2 \quad 4$$

Object identification of the "A" in Figure 13e is based on the fact that there are five "words" in the unique contour "data signature" with particular values and in a particular circular sequence to identify the shape, and therefore the object in question. Other contour "data signatures" for the objects as shown are as follows:

| Figure 13a—sailboat | 3 | 3 | −4 | 3 | 1 | 1 | 3 | −2 |
| 13b—circle | 1 | 1 | 1 | 1 | 1 | 1 | 1 | 1 |
| 13c—rectangle | 2 | 2 | 2 | 2 | | | | |
| 13d—"7" | 4 | 3 | 4 | −3 | | | | |
| 13f—star | 3 | −1 | 3 | −1 | 3 | −1 | 3 | −1 |

These contour "data signatures" and others may be stored as firmware in the RAM of the microprocessor 13. When the imager 11 of the didactic device 10 is exposed to a flash card or similar implement on which indicia of some form appears, the image signal data as collected in the RAM 12 is compared with the data signatures comprising the firmware in the RAM of the microprocessor 13. The character recognition comparator of the microprocessor 13 produces an analytical signal output determinative of the comparative analysis between the image signal data and the closest data signature within the firmware of the RAM of the microprocessor 13. This analytical signal output from the character recognition comparator triggers the speech synthesis electronics 14 to generate an audio signal output based upon the coded digital inputs provided by the vocabulary memory 15 and reflective of the content of the analytical signal output from the character recognition comparator, and the audio output is converted to vocal sound by the speaker circuitry 18. Depending upon the application desired, the speech synthesis electronics 14 can be tailored to deliver spoken comments of any suitable character as determined by the vocabulary stored in the ROM 15. The spoken comments will be relevant to the object viewed by the imager 11 of the didactic device 10 in the preferred implementation of this invention. Thus, when the didactic device is in the form of a doll 20 as in Figure 2, the doll will have the apparent ability to "see" and to "speak" about what it has "seen".

**Claims**

1. Apparatus for monitoring a visual image and producing an audio output reflective of the information content of the visual image, said apparatus comprising means for monitoring a visual image and providing a signal data output indicative of the informational content of the visual image, memory storage means having sets of digital data stored therein representative of at least a plurality of different informational contents corresponding to differing visual images as observed by said monitoring means, controller means operably associated with said monitoring means and said memory storage means for comparing the signal data output from said monitoring means with the sets of digital data stored in said memory storage means, audio means operably associated with said memory storage means and said controller means for producing an audio output, said controller means being responsive to said signal data output from said monitoring means for applying a selected set of said digital data from said memory storage means to said audio means for producing an audio output reflective of the informational content of the visual image as observed by said monitoring means, and speaker means (18) connected to said audio means for converting said audio output received therefrom to audible sounds; characterized in that said monitoring means comprises imager means (11) for viewing a two-dimensional object and providing a signal data output indicative of the appearance of the object in two dimensions as the information content relevant thereto, memory means (12) connected to the output of said imager means for receiving the signal data output therefrom and arranging the signal data output in a matrix array of signals disposed in rows and columns, said controller means comprising processor means (13) having memory storage means providing data signatures of at least a plurality of two-dimensional object configurations, said processor means being connected to the output of said memory means and including examination instructions for comparing the matrix array of signals provided by said memory means from the signal data output of said imager means with the data signatures of said memory storage means, said processor means including recognition comparator means for providing an analytical signal output determinative of the comparative analysis between the matrix array of signals provided by said memory means from said signal data output of said imager means and the data signature of said memory storage means having the closest identity to said matrix array of signals, and said audio means including speech synthesizer means (14, 15) connected to the output of said recognition comparator means for receiving the analytical signal output thereof and generating said audio output reflective of the content of the analytical signal output from said recognition comparator means such that a didactic device for providing a learning experience and/or entertainment is produced.

2. Apparatus as set forth in claim 1, further characterized in that said imager means comprises an optical imager array having a plurality of imager units arranged in rows and columns and defining a two-dimensional imager viewing face having a field of view for providing a signal data output indicative of the appearance of an object in two dimensions located within the field of view.

3. Apparatus as set forth in claim 2, further characterized in that said memory means is provided with a storage capacity sufficient to accept the signal data output from said imager array, said memory means having a plurality of pixel units arranged in rows and columns and defining a two-dimensional memory matrix array corresponding to said imager array for receiving said signal data output as a digital two-dimensional image of the image received by said imager viewing face of an object in two dimensions located within the field of view.

4. Apparatus as set forth in claim 3, further characterized in that said memory means connected to the output of said imager array comprises first memory means, said processor means comprising a microprocessor connected to the output of said first memory means, said microprocessor including second memory means having programmed instructions stored therein relating to determination of location of discretizing of images corresponding to objects in two dimensions within the field of view of said optical imager array, said memory storage means comprising third memory means providing data signatures of at least a plurality of two-dimensional object configurations for comparision with the two-dimensional digital image provided by said two-dimensional memory matrix array, and said recognition comparator means being effective to compare the two-dimensional digital image of said two-dimensional memory matrix array with the data signatures of said third memory means so as to provide said analytical signal output determinative of the comparative analysis performed thereby, said speech synthesizer means being connected to the output of said recognition comparator means of said microprocessor for receiving said analytical signal output thereof and generating said audio output representative of human speech and reflective of the content of the analytical signal output from said recognition comparator means.

5. Apparatus as set forth in any of claims 2 to 4, further characterized in that the plurality of imager units of said optical imager array comprise an array of charge coupled devices arranged in rows and columns.

6. Apparatus as set forth in any preceding claim, further characterized in that said speech synthesizer means includes vocabulary memory means (15) for storing digital speech data from which a plurality of words may be derived, and a speech synthesizer (14) connected to the output of said recognition comparator means for receiving the analytical signal output thereof and accessing digital speech data from said vocabulary memory means in response thereto for generating said audio output representative of human speech and reflective of the content of the analytical signal output from said recognition comparator means.

7. Apparatus as set forth in any preceding claim, further characterized in that said didactic device is a doll (20) having a body structure in which said imager means, said memory means, said processor means, said speech synthesizer means and said speaker means are disposed to give the doll the apparent ability to see via said imager means and to talk about what is viewed by said imager means.

8. Apparatus as set forth in any preceding claim, further characterized by a plurality of flash cards (21) having different indicia in the form of symbols, shapes, and/or legends depicted on respective cards and comprising a plurality of two-dimensional objects, and said speech synthesizer means generating said audio output reflective of the content of the indicia on a respective flash card for audibilizing as vocal sound by said speaker means in response to the exposure of said flash card to said imager means.

**Patentansprüche**

1. Vorrichtung zum Überwachen eines sichtbaren Bildes und zur Erzeugung eines den Informationsinhalt des sichtbaren Bildes wiedergebenden hörbaren Ausgangssignals mit Mitteln zum Überwachen eines sichtbaren Bildes und zum Erzeugen eines den Informationsinhalt des sichtbaren Bildes anzeigenden Datenausgangssignals, einem Speicher, in dem Gruppen digitaler Daten gespeichert sind, die wenigstens mehrere unterschiedliche Informationsinhalte entsprechend unterschiedlichen sichtbaren Bildern gemäß der Betrachtung durch die Überwachungsmittel repräsentieren, einem den Überwachungsmitteln und dem Speicher wirkungsmäßig zugeordneten Steuerwerk zum Vergleichen des Datenausgangssignals der Überwachungsmittel mit den Gruppen digitaler Daten, die in dem Speicher gespeichert sind Audiomitteln, die dem Speicher und dem Steuerwerk wirkungsmäßig zugeordnet sind und eine hörbares Ausgangssignal erzeugen, wobei das Steuerwerk in Abhängigkeit von dem Datenausgangssignal aus den Überwachungsmitteln eine ausgewählte Gruppe digitaler Daten aus dem Speicher an die Audiomittel zur Erzeugung eines hörbaren Ausgangssignals anlegt, das den Informationsinhalt des sichtbaren Bildes gemäß der Betrachtung durch die Überwachungsmittel wiedergibt, und einem Lautsprecher (18), der an die Audiomittel angeschlossen ist und das von diesen Mitteln empfangene hörbare Ausgangssignal in hörbare Töne umsetzt, dadurch gekennzeichnet, daß die Überwachungsmittel eine Abbildungsvorrichtung (11) zum Betrachten eines zweidimensionalen Objekts und zum Erzeugen eines Datenausgangssignals enthalten, das das Auftreten des Objekts in zwei Dimensionen als den zugehörigen Informationsinhalt angibt, daß an den Ausgang der Abbildungsvorrichtung eine Speichervorrichtung (12) angeschlossen ist, die das Datenausgangssignal aus der Abbildungsvorrichtung empfängt und in eine Matrixanordnung aus zeilen- und spaltenweise angeordneten Signalen umgruppiert, daß das Steuerwerk einen Prozessor (13) mit Speichermitteln enthält und Datenkennungen für wenigstens mehrere zweidimensionale Objektkonfiguration liefort, daß der Prozessor an den Ausgang der Speichervorrichtung angeschlossen ist und Prüfbefehle zum Vergleichen der von der Speichervorrichtung aus den Datenausgangssignalen der Abbildungsvorrichtung gebildeten Matrixanordnung aus Signalen mit den Datenkennungen aus den Speichermitteln enthält, daß der Prozessor einen Erkennungskomparator enthält, der ein analytisches Ausgangssignal erzeugt, das entscheidend ist für die vergleichende Analyse zwischen der von der Speichervorrichtung aus den Datenausgangssignalen der Abbildungsvorrichtung gebildeten Matrixanordnung aus Signalen mit der Datenkennung aus den Speichermitteln, die weitestgehende Übereinstimmung mit der Matrixanordnung aus Signalen zeigt, und daß die Audiomittel eine Sprachsynthesevorrichtung (14, 15) enthalten, die an den Ausgang des Erkennungskomparators angeschlossen ist und dessen analytisches Ausgangssignal empfängt und das Tonausgangssignal erzeugt, das den Inhalt des analytischen Ausgangssignals aus dem Erkennungskomparator wiedergibt, so daß ein didaktisches Gerät zur Ermöglichung einer Lernerfahrung und/oder einer Unterhaltung erzeugt wird.

2. Vorrichtung nach Anspruch 1, dadurch gekennzeichnet, daß die Abbildungsvorrichtung eine optische Abbildungsmatrix aufweist, die mehrere in Zeilen und Spalten angeordnete Abbildungseinheiten enthält und eine zweidimensionale Betrachtungsfläche bildet, die ein Gesichtsfeld aufweist, damit ein Datenausgangssignal erzeugt wird, das die Anwesenheit eines zweidimensionalen Objekts innerhalb des Gesichtsfeldes anzeigt.

3. Vorrichtung nach Anspruch 2, dadurch gekennzeichnet, daß die Speichervorrichtung eine ausreichend große Speicherkapazität hat, daß sie das Datenausgangssignal aus der Abbildungsmatrix aufnehmen kann, wobei die Speichervorrichtung mehrere in Zeilen und Spalten angeordnete Bildpunkteinheiten aufweist, die eine zweidimensionale Speichermatrixanordnung definieren, die der Abbildungsmatrix entspricht, damit das Datenausgangssignal als digitale, zweidimensionale Abbildung des von der Betrachtungsfläche empfangenen Bildes eines zweidimensionalen, innerhalb des Gesichtsfeldes befindlichen Objekts empfangen wird.

4. Vorrichtung nach Anspruch 3, dadurch gekennzeichnet, daß die an den Ausgang der Abbildungsmatrix angeschlossene Speichervorrichtung eine erste Speichereinheit enthält, daß der Prozessor ein Mikroprozessor ist, der an den Ausgang der ersten Speichereinheit angeschlossen ist, daß der Mikroprozessor eine zweite Speichereinheit enthält, in der programmierte Befehle gespeichert sind, die sich auf die Bestimmung der Lageerfassung und der Diskretisierung von Abbildungen von Objekten in zwei Dimensionen innerhalb des Gesichtsfeldes der optischen Abbildungsmatrix beziehen, daß die Speichermittel eine dritte Speichereinheit enthalten, die Datenkennungen für wenigstens mehrere zweidimensionale Objektkonfigurationen für den Vergliech mit den zweidimensionalen digitalen Bildern aus der zweidimensionalen Speichermatrix zur Verfügung stellt, daß der Erkennungskomparator das zweidimensionale digitale Abbild aus der zweidimensionalen Speichermatrix mit den Datenkennungen aus der dritten Speichereinheit vergliecht und das die auf diese Weise durchgeführt vergleichende Analyse kennzeichnende analytische Ausgangssignal erzeugt, und daß die Sprachsynthesevorrichtung an den Ausgang des Erkennungskomparators des Mikroprozessors angeschlossen ist, damit side das analytische Ausgangssignal empfängt und das hörbare Ausgangssignal abgibt, das menschliche Sprache repräsentiert und den Inhalb des analytischen Ausgangssignals aus dem Erkennungskomparator wiedergibt.

5. Vorrichtung nach einem der Ansprüche 2 bis 4, dadurch gekennzeichnet, daß die mehreren Abbildungseinheiten der optischen Abbildungsmatrix aus einer Matrix landungsgekoppelter Baueinheiten besteht, die in Zeilen und in Spalten angeordnet sind.

6. Vorrichtung nach einem der vorhergehenden Ansprüche, dadurch gekennzeichnet, daß die Sprachsynthesevorrichtung einen Wörterspeicher (15) zum Speichern digitaler Sprachdaten enthält, aus denen mehrere Wörter abgeleitet werden können, und daß die Sprachsynthe-sevorrichtung außerdem eine Sprachsynthese-einheit (14) enthält, die an den Ausgang des Erkennungskomparators angeschlossen ist und aus diesem das analytische Ausgangssignal empfängt, damit sie als Reaktion darauf einen Zugriff auf digitale Sprachdaten aus dem Wörterspeicher ausübt und das hörbare Ausgangssignal erzeugt, das menschliche Sprache repräsentiert und den Inhalt des analytischen Ausgangssignals aus dem Erkennungskomparator wiedergibt.

7. Vorrichtung nach einem der vorhergehenden Ansprüche, dadurch gekennzeichnet, daß das didaktische Gerät eine Puppe (20) ist, die einen Körper aufweist, in dem die Abbildungsvorrichtung, die Speichermittel, der Prozessor, die Sprachsynthesevorrichtung und der Lautsprecher untergebracht sind, damit der Puppe die Fähigkeit verliehen wird, mittels der Abbildungsvorrichtung zu sehen und über das zu sprechen, was von der Abbildungsvorrichtung betrachtet wird.

8. Vorrichtung nach einem der vorhergehenden Ansprüche, gekennzeichnet durch mehrere Anzeigekarten (21), auf denen verschiedene Kennzeichen in Form von Symbolen, Formen und/oder Aufschriften angebracht sind, die mehrere zweidimensionale Objekte bilden, wobei die Sprachsynthesevorrichtung das hörbare Ausgangssignal erzeugen, das den Inhalt den Kennzeichen auf einer jeweiligen Anzeigekarte wiedergibt, damit von dem Lautsprecher als Reaktion darauf, daß die Anzeigekarte der Abbildungsvorrichtung gezeigt wird, in hörbarer Weise ein Sprachlaut erzeugt wird.

**Revendications**

1. Appareil destiné à contrôler une image visuelle et à produire sortie audio représentant le contenu en informations de l'image visuelle, ledit appareil comprenant un dispositif pour contrôler une image visuelle et pour produire une sortie de données de signal indiquant le contenu en informations de l'image visuelle, un dispositif de mémorisation dans lequel sont mémorisés des ensembles de données numériques représentant au moins plusieurs contenus en informations différents correspondant à différentes images visuelles observées par ledit dispositif de contrôle, un dispositif de commande associé en fonctionnement avec ledit dispositif de contrôle et ledit dispositif de mémorisation pour comparer la sortie de données de signaux provenant dudit dispositif de contrôle avec les ensembles de données numériques mémorisées dans ledit dispositif de mémorisétion, un dispositif audi associé en fonctionnement avec ledit dispositif de mémorisation et ledit dispositif de commande pour produire une sortie audio, ledit dispositif de commande réagissant à ladite sortie de données de signaux provenant dudit dispositif de contrôle en appliquant un ensemble sélectionné desdites données numériques provenant dudit dispositif de mémorisation audit dispositif audio pour produire une sortie audio représentant le contenu en informations de l'image visuelle telle qu'observée par ledit dispositif de contrôle et un haut-parleur (18) connecté audit dispositif audio pour convertir ladite sortie audio qui en est reçue en un sont audible, caractérisé en ce que ledit dispositif de contrôle comporte un dispositif de formation d'image (11) destiné à observer un object bidimensionnel et produisant une sortie de données de signaux représentant l'apparence de l'objet dans deux dimensions comme contenu d'informations le concernant, une mémoire (12) connectée à la sortie dudit dispositif de formation d'image pour en recevoir la sortie de données de signaux et pour arranger la sortie de données de signaux en une matrice de signaux disposés en rangées et en colonnes, ledit dispositif de commande comprenant un processeur (13) avec un dispositif de mémorisation produisant des signatures de données d'au moins plusieurs configurations d'objets bidimensionnnels, ledit processeur étant connecté à la sortie de ladite mémoire et contenant des instructions d'examen pour comparer la matrice de signaux produite par ladite mémoire à partir de ladite sortie de données de signaux dudit dispositif de formation d'image avec les signatures de données dudit dispositif de mémorisation, ledit processeur comprenant un dispositif comparateur de reconnaissance destiné à produire une sortie de signal analytique déterminant l'analyse comparative entre la matrice de signaux produite par ladite mémoire à partir de ladite sortie de données de signaux dudit dispositif de formation d'image et la signature de données dudit dispositif de mémorisation, ayant l'identité la plus proche avec ladite matrice de signaux et ledit dispositif audio comprenant un dispositif de synthèse de parole (14, 15) connecté à la sortie dudit dispositif comparateur de reconnaissance pour en recevoir la sortie de signal analytique et pour produire ladite sortie audio représentant le contenu de la sortie de signal analytique provenant du dispositif comparateur de reconnaissance de manière qu'un appareil didactique soit produit pour apporter une expérience d'enseignement et/ou un amusement.

2. Appareil selon la revendication 1, caractérisé en outre en ce que ledit dispositif de formation d'image comporte une matrice de formation d'image optique comprenant plusieurs unités de formation d'image disposées en rangées et en colonnes et définissant une face d'observation d'image bidimensionnelles ayant un champ de vision pour produire une sortie de données de signaux indiquant l'apparence d'un objet en deux dimensions, situé dans le champ de vision.

3. Appareil selon la revendication 2, caractérisé en outre en ce que ladite mémoire à une capacité de mémorisation suffisante pour recevoir la sortie de données de signaux de ladite matrice de formation d'image, ladite mémoire ayant plusieurs unités d'éléments d'image disposées en rangées et en colonnes et définissant une matrice de mémoire bidimensionnelle correspondant à ladite matrice de formation d'image pour recevoir ladite sortie de données de signaux comme une image bidimensionnelle numérique de l'image reçue par la face d'observation dudit dispositif de formation d'image d'un objet en deux dimensions situé dans le champ de vision.

4. Appareil selon la revendication 3, caractérisé en outre en ce que ladite mémoire connectée à la sortie de ladite matrice de formation d'image comporte une première mémoire, ledit processeur consistant en un microprocesseur connecté à la sortie de la dite première mémoire, ledit microprocesseur comprenant une seconde mémoire dans laquelle sont mémoirées des instructions programmées concernant la détermination de la position et de la numérisation d'images correspondant à des objets en deux dimensions dans le champ de vision de la matrice optique de formation d'image, ledit dispositif de mémorisation comprenant une troisième mémoire fournissant des signatures de données d'au moins plusieurs configurations d'objets bidimensionnels pour une comparaison avec l'image numérique bidimensionnelle produite par ladit matrice de mémoire bidimensionnelle, et ledit dispositif comparateur de reconnaissance ayant pour effet de comparer l'image numérique bidimensionnelle de ladite matrice de mémoire bidimensionnelle avec les signatures de données de ladite troisième mémoire de manière à produire ladite sortie de signal analytique déterminant l'analyse comparative qui y est effectuée, ledit dispositif synthétiseur de parole étant connecté à la sortie dudit dispositif comparateur de reconnaissance dudit microprocesseur pour en recevoir la sortie de signal analytique et pour produire ladite sortie audio représentant une parole humaine et reflétant le contenu de la sortie de signal analytique dudit dispositif comparateur de reconnaissance.

5. Appareil selon l'une quelconque des revendications 2 à 4, caractérisé en outre en ce que les plusieurs unités de formation d'image de ladite matrice de formation d'image optique consiste en une matrice de composants à couplage de charge disposées en rangées et en colonnes.

6. Appareil selon l'une quelconque des revendications précédentes, caractérisé en outre en ce que le dispositif de synthèse de parole comporte une mémoire de vocabulaire (15) qui mémorise des données de parole numériques à partir desquelles peuvent être dérivés plusieurs mots et un synthétiseur de parole (14) connecté à la sortie dudit dispositif comparateur de reconnaissance pour en recevoir en réponse sa sortie de signal analytique et pour accéder à des données numériques de parole provenant de ladite mémoire de vocabulaire, de manière à produire ladite sortie audio représentant une parole humaine et reflétant le contenu de la sortie de signal analytique dudit dispositif comparateur de reconnaissance.

7. Appareil selon l'une quelconque des revendications précédentes, caractérisé en outre en ce que ledit appareil didactique est une poupée (20) ayant une structure d'un corps dans lequel ledit dispositif de formation d'image, ledit dispositif de mémorisation, ledit processeur, ledit dispositif de synthèse de parole et ledit haut-parleur sont disposés pour donner à la poupée la possibilité apparente de voir par ledit dispositif de formation d'image et de parler de ce qui est vu par ledit dispositif de formation d'image.

8. Appareil selon l'une quelconque des revendications précédentes, caractérisé en outre par plusieurs cartes brillantes (21) portant des indices différents sous forme de symboles, de forme et/ou de légendes représentés sur des cartes respectives et consistent en plusieurs objets bidimensionnels, et ledit dispositif de synthèse de parole produisant ladite sortie audio reflétant le contenu de l'indice sur une carte brillante respective en rendant audible un son vocal par ledit haut-parleur en réponse a l'exposition de ladite carte brillante audit dispositif de formation d'image.

Fig. 3

Fig. 1

IMAGER

RANDOM ACCESS MEMORY

MICROPROCESSOR

READ-ONLY MEMORY

SPEECH SYNTHESIS

FILTER

Fig. 4a

POINT LOCATION

A (BLACK)

B

C

Fig. 4b

A (BLACK)

B (BLACK)

C DON'T CARE

TURN LEFT
CELL B→CELL A
GO TO ENTRY

Fig. 4c

A (BLACK)

B WHITE

C BLACK

GO STRAIGHT
CELL C→CELL A
GO TO ENTRY

Fig. 4d

A (BLACK)

B WHITE

C WHITE

TURN RIGHT
CELL A→CELL A
GO TO ENTRY

Fig. 12a

Fig. 12b

Fig. 12c

Fig. 2

0 040 682

INCREASE
L BY 1

Fig. 5a

INCREASE
A BY L

Fig. 5b

DECREASE
L BY 1

Fig. 5c

DECREASE
A BY L

Fig. 5d

Fig. 10a

Fig. 10b

3

*Fig. 6*

Fig. 7a

| STEP | A | L | STEP | A | L | STEP | A | L |
|---|---|---|---|---|---|---|---|---|
| 1 | 0 | 1 | 32 | 80 | 3 | 63 | 120 | -1 |
| 2 | 1 | 1 | 33 | 80 | 4 | 64 | 121 | -1 |
| 3 | 2 | 1 | 34 | 80 | 5 | 65 | 121 | -2 |
| 4 | 2 | 2 | 35 | 80 | 6 | 66 | 123 | -2 |
| 5 | 4 | 2 | 36 | 86 | 6 | 67 | 123 | -3 |
| 6 | 6 | 2 | 37 | 92 | 6 | 68 | 123 | -4 |
| 7 | 6 | 3 | 38 | 98 | 6 | 69 | 123 | -5 |
| 8 | 9 | 3 | 39 | 104 | 6 | 70 | 123 | -6 |
| 9 | 9 | 4 | 40 | 104 | 5 | 71 | 129 | -6 |
| 10 | 13 | 4 | 41 | 104 | 4 | 72 | 129 | -7 |
| 11 | 13 | 5 | 42 | 100 | 4 | 73 | 136 | -7 |
| 12 | 13 | 6 | 43 | 100 | 3 | 74 | 136 | -8 |
| 13 | 19 | 6 | 44 | 100 | 2 | 75 | 144 | -8 |
| 14 | 19 | 7 | 45 | 100 | 1 | 76 | 152 | -8 |
| 15 | 26 | 7 | 46 | 100 | 0 | 77 | 160 | -8 |
| 16 | 26 | 8 | 47 | 100 | -1 | 78 | 168 | -8 |
| 17 | 34 | 8 | 48 | 99 | -1 | 79 | 168 | -7 |
| 18 | 42 | 8 | 49 | 99 | -2 | 80 | 175 | -7 |
| 19 | 50 | 8 | 50 | 101 | -2 | 81 | 175 | -6 |
| 20 | 58 | 8 | 51 | 101 | -3 | 82 | 181 | -6 |
| 21 | 66 | 8 | 52 | 101 | -4 | 83 | 181 | -5 |
| 22 | 66 | 7 | 53 | 101 | -5 | 84 | 186 | -5 |
| 23 | 66 | 6 | 54 | 101 | -6 | 85 | 186 | -4 |
| 24 | 72 | 6 | 55 | 107 | -6 | 86 | 186 | -3 |
| 25 | 72 | 5 | 56 | 113 | -6 | 87 | 189 | -3 |
| 26 | 72 | 4 | 57 | 119 | -6 | 88 | 189 | -2 |
| 27 | 76 | 4 | 58 | 119 | -5 | 89 | 191 | -2 |
| 28 | 76 | 3 | 59 | 119 | -4 | 90 | 191 | -1 |
| 29 | 76 | 2 | 60 | 119 | -3 | 91 | 192 | -1 |
| 30 | 78 | 2 | 61 | 119 | -2 | 92 | 193 | -1 |
| 31 | 80 | 2 | 62 | 119 | -1 | 93 | 193 | 0 |

Fig. 7b

0 040 682

6 / 8

**Fig. 8**

$$\boxed{|\phi| > |\theta|}$$
POSTPONE DECISION
**Fig. 9a**

$$\boxed{|\phi| \leq |\theta|}$$
MAKE DECISION
**Fig. 9b**

DECISION = NO
STILL ON SAME COURSE

DECISION = YES
COURSE HAS CHANGED

**Fig. 9c**

| STEP | $\vec{B}$ | $N_1$ | $N_2$ | $N_3$ | $N_4$ | $\vec{N}$ | $\vec{V}$ | ACTION |
|---|---|---|---|---|---|---|---|---|
| 1 | - | - | - | - | - | — | 0 | 1ST FIVE |
| 2 | - | - | - | - | 0 | — | 0 | AVG = 2/5 |
| 3 | - | - | - | 0 | 0 | — | 0 | ≈0 → |
| 4 | - | - | 0 | 0 | 0 | — | 2 | INITIAL |
| 5 | - | 0 | 0 | 0 | 2 | — | 0 | $\vec{B} = 0$ |
|  | 0 | 0 | 0 | 0 | 2 | — | 0 | RESET |
| 6 |  | 0 | 0 | 2 | 0 | 2/4 | 0 | NO CHANGE |
| 7 |  | 0 | 2 | 0 | 0 | 2/4 | 0 | NO CHANGE |
| 8 |  | 2 | 0 | 0 | 0 | 2/4 | 0 | NO CHANGE |
| 9 |  | 0 | 0 | 0 | 0 | 0 | 2 | POSTPONE |
| 10 |  | 0 | 0 | 0 | 2 | 2/4 | 0 | NO CHANGE |
| 11 |  | 0 | 0 | 2 | 0 | 2/4 | 0 | NO CHANGE |
| 12 |  | 0 | 2 | 0 | 0 | 2/4 | 0 | NO CHANGE |
| 13 |  | 2 | 0 | 0 | 0 | 2/4 | 0 | NO CHANGE |
| 14 |  | 0 | 0 | 0 | 0 | 0 | 2 | POSTPONE |
| 15 |  | 0 | 0 | 0 | 2 | 2/4 | 4 | POSTPONE |
| 16 |  | 0 | 0 | 2 | 4 | 6/4 | 2 | POSTPONE |
| 17 |  | 0 | 2 | 4 | 2 | 8/4 | 4 | POSTPONE |
| 18 |  | 2 | 4 | 2 | 4 | 12/4 | 2 | ΔB = 3 |
|  | 3 | -1 | 1 | -1 | 1 | — | -1 | RESET |
| 19 |  | 1 | -1 | 1 | -1 | 0 | 1 | POSTPONE |
| 20 |  | -1 | 1 | -1 | 1 | 0 | 1 | POSTPONE |

| STEP | $\vec{B}$ | $N_1$ | $N_2$ | $N_3$ | $N_4$ | $\vec{N}$ | $\vec{V}$ | ACTION |
|---|---|---|---|---|---|---|---|---|
| 21 | 3 | 1 | -1 | 1 | 1 | 2/4 | -1 | POSTPONE |
| 22 |  | -1 | 1 | 1 | -1 | 0 | 1 | POSTPONE |
| 23 |  | 1 | 1 | -1 | 1 | 2/4 | -1 | POSTPONE |
| 24 |  | 1 | -1 | 1 | -1 | 0 | 1 | POSTPONE |
| 25 |  | -1 | 1 | -1 | 1 | 0 | 1 | POSTPONE |
| 26 |  | 1 | -1 | 1 | 1 | 2/4 | -1 | POSTPONE |
| 27 |  | -1 | 1 | 1 | -1 | 0 | 1 | POSTPONE |
| 28 |  | 1 | 1 | -1 | 1 | 2/4 | 1 | POSTPONE |
| 29 |  | 1 | -1 | 1 | 1 | 2/4 | -1 | POSTPONE |
| 30 |  | -1 | 1 | 1 | -1 | 0 | 1 | POSTPONE |
| 31 |  | 1 | 1 | -1 | 1 | 2/4 | 3 | POSTPONE |
| 32 |  | 1 | -1 | 1 | 3 | 4/4 | 3 | POSTPONE |
| 33 |  | -1 | 1 | 3 | 3 | 6/4 | 3 | POSTPONE |
| 34 |  | 1 | 3 | 3 | 3 | 10/4 | 3 | POSTPONE |
| 35 |  | 3 | 3 | 3 | 3 | 12/4 | 1 | ΔB = 3 |
|  | 6 | 0 | 0 | 0 | 0 | — | -2 | RESET |
| 36 |  | 0 | 0 | 0 | -2 | -2/4 | 0 | NO CHANGE |
| 37 |  | 0 | 0 | -2 | 0 | -2/4 | 0 | NO CHANGE |
| 38 |  | 0 | -2 | 0 | 0 | -2/4 | 0 | NO CHANGE |
| 39 |  | -2 | 0 | 0 | 0 | -2/4 | 0 | NO CHANGE |
| 40 |  | 0 | 0 | 0 | 0 | 0 | 0 | NO CHANGE |

FINAL $\vec{B}$ = 6   FINAL $\vec{\Delta B}$ = 2

*Fig. 11*

Fig. 13a

Fig. 13b

Fig. 13c

Fig. 13d

Fig. 13e

Fig. 13f